# EUROPEAN PATENT APPLICATION

(11) **EP 3 182 668 A1**
(43) Date of publication of application: **21.06.2017**
(21) Application number: 15307035.4
(22) Date of filing: 17.12.2015
(51) Int. Cl.: H04L 29/06

(54) **METHOD AND DEVICE FOR TRANSMISSION OF CONTENT**

(71) Applicant: ALCATEL LUCENT, 92100 Boulogne-Billancourt (FR)
(72) Inventor: LOU, Zhe, 2018 Antwerpen (BE); TANG, Siyu, 2018 Antwerpen (BE)
(74) Representative: ALU Antw Patent Attorneys

(57) **Abstract**

Embodiments relate to a method for transmission of content, executed by a content transmission device (2, 3), comprising:
- receiving (T1) requests (RQ) for content (C) from a plurality of clients (4), wherein a request (RQ) is associated with a buffer size (BS), a buffer filling (BF) and at least one content reception deadline (Db, De),
- determining (T2) a content transmission schedule (SCH) for transmitting content in response to the requests (RQ), wherein the content transmission schedule is determined in function of the buffer sizes (BS), buffer fillings (BF) and content reception deadlines (Db, De),
- determining (T3) whether a network congestion condition is met, in function of the buffer sizes, buffer fillings and content reception deadlines,
- sending (T4, T5) content to the clients (4) in function of the content transmission schedule (SCH), wherein, if the network congestion condition is met, the content sent to at least one of the clients (4) is associated with future congestion information (CI).

## Description

### FIELD OF THE INVENTION

The present invention relates to the field of telecommunication. In particular, the present invention relates to methods and devices for transmission of content.

### BACKGROUND

The interactive character of emerging applications such as WebRTC, on-line gaming and augmented reality indicates that timely delivery is key. Deadline-aware scheme is therefore proposed to prioritize bits that have the most urgent deadline at the expense of the delivery of less urgent bits. An example of proposed deadline-aware content delivery protocol is SCAP (Shared Content Addressing Protocol).

A practical implementation at the receiver is to maintain a large enough play-out buffer that can store bits that are delivered before their deadline, so that delivery of bits before their deadline poses no problem. Therefore, the sender will keep sending the requested content until the user cancels the previous request or initiates a different one. By allowing the delivery of content before their deadlines, network resource utilization is maximized and bandwidth consumption peaks are avoided.

In case of insufficient network capacity, timely delivery of traffic can no longer be guaranteed. The packets whose requested deadlines are violated will be dropped as the congestion signal to the clients that initiated the request. The packet drops being issued, consequently, impair the viewing experience (if transmission is unreliable) at the end-user or incurs data retransmission which leads to longer end-to-end delay (if transmission is reliable).

It has been seen that not every delivered bit is effectively watched by a user. Experimental studies of large-scale Video-on-Demand systems have shown the existence of extremely "impatient" users, who go through the beginning of videos quickly (equivalent to zapping in linear TV) to select a video of interest. The analysis reveals that half of the video sessions are terminated by the user within the first 10 minutes, while 37% of the video session do not even last the first five minutes. A user who is inclined to perform frequent zapping, fast forwarding, or even viewing cancellation decreases the network efficiency in terms of the amount of bits that are downloaded but not viewed.

### SUMMARY

It is thus an object of embodiments of the present invention to propose a method and a device for transmission of content, which do not show the inherent shortcomings of the prior art.

Accordingly, embodiments relate to a method for transmission of content, executed by a content transmission device, comprising:
- receiving requests for content from a plurality of clients, wherein a request is associated with a buffer size, a buffer filling and at least one content reception deadline,
- determining a content transmission schedule for transmitting content in response to the requests, wherein the content transmission schedule is determined in function of the buffer sizes, buffer fillings and content reception deadlines,
- determining whether a network congestion condition is met, in function of the buffer sizes, buffer fillings and content reception deadlines,
- sending content to the clients in function of the content transmission schedule, wherein, if the network congestion condition is met, the content transmission device sends, to at least one of the clients, future congestion information.

Correspondingly, embodiments relate to a content transmission device comprising means configured for:
- receiving requests for content from a plurality of clients, wherein a request is associated with a buffer size, a buffer filling and at least one content reception deadline,
- determining a content transmission schedule for transmitting content in response to the requests, wherein the content transmission schedule is determined in function of the buffer sizes, buffer fillings and content reception deadlines,
- determining whether a network congestion condition is met, in function of the buffer sizes, buffer fillings and content reception deadlines,
- sending content to the clients in function of the content transmission schedule and, if the network congestion condition is met, future congestion information to at least one of the clients.

In some embodiments, the future congestion information comprises a flag having a predetermined value and/or a target buffer size.

Some embodiments comprise sending the future congestion information to all the clients. Other embodiments comprise sending the future congestion information to a sub-set of the clients.

Determining a content transmission schedule may comprise selecting a request associated with an earliest deadline.

Embodiments also relates to a method for consumption of content, executed by a client device, comprising repeating the following steps:
- sending a request for content to a content transmission device, wherein the request is associated with a buffer size, a buffer filling and at least one content reception deadline,
- receiving, from the content transmission device, a response including at least part of the content, storing the received content in a buffer, consuming the requested content and removing the requested content from the buffer,
- in response to receiving future congestion information from the content transmission device, increasing the buffer size.

Correspondingly, embodiments relates to a client device for consumption of content, comprising means for repeating the following steps:
- sending a request for content to a content transmission device, wherein the request is associated with a buffer size, a buffer filling and at least one content reception deadline,
- receiving, from the content transmission device, a response including at least part of the content, storing the received content in a buffer, consuming the requested content and removing the requested content from the buffer,
- in response to receiving future congestion information from the content transmission device, increasing the buffer size.

The buffer size, the buffer filling and the at least one content reception deadline may be included in the request.

Some embodiments comprise decreasing the buffer size after a predetermined period wherein no future congestion information has been received.

Increasing the buffer size may comprise setting the buffer size to a target buffer size specified by the future congestion information.

Increasing the buffer size may comprise increasing the buffer size by a predetermined amount.

Embodiments also relates to a content transmission network comprising at least one content transmission device and at least one client.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a content transmission network,
Figures 2 and 3 are flowcharts of methods for content transmission in the network of Figure 1,
Figure 4 is a graph representing bandwidth consumption in the network of Figure 1, and
Figure 5 is a structural view of a content transmission device of the network of Figure 1.

### DESCRIPTION OF EMBODIMENTS

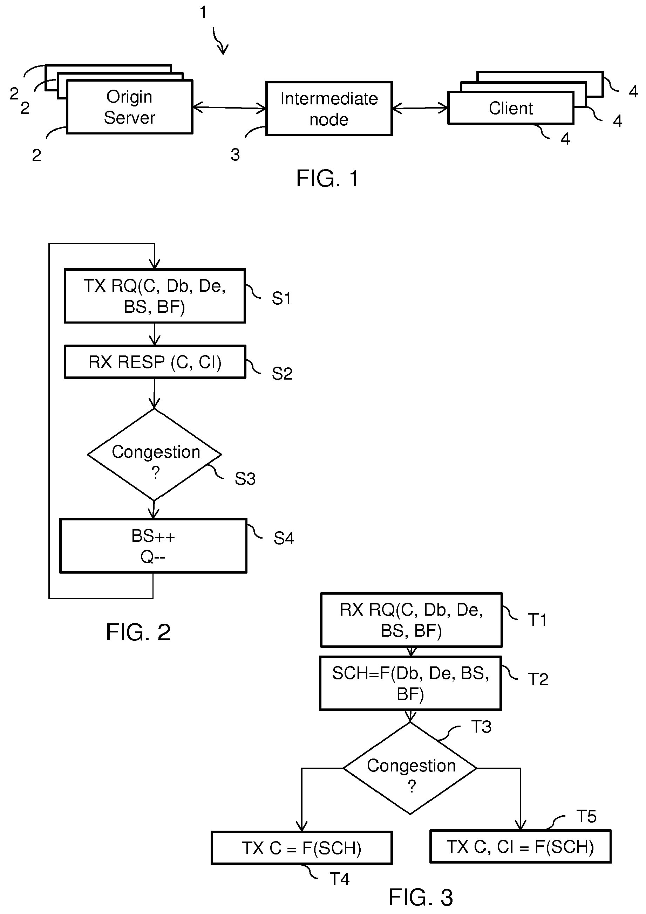

**Figure 1** is a block diagram of a content transmission network 1, comprising one or more origin servers 2, one or more intermediate nodes 3, and one or more clients 4.

An origin server 2 stores and/or generates content, for example multimedia data, interactive application data... A client 4 may send a request RQ for content to an origin server 2. One or more intermediate nodes 3 may act as intermediaries between clients 4 and origin servers 2, and provide various functions such as buffering, caching...

In the content transmission network 1, the clients 4, intermediate nodes 3 and origin servers 2 use a deadline-aware content transmission protocol. Accordingly, a request RQ for content sent by a client 4 is associated at least with one content reception deadline. For example, in some proposed implementations of the SCAP protocol, a request RQ contains, among others:
- α content address Ca which, in combination with the IP address of the origin server 2, uniquely identifies the starting bit of the requested content,
- a content size Cs, and
- a deadline begin Db and a deadline end De which, based on a linear interpolation, specify content reception deadlines for each bits of the requested content.

An intermediate node 3 receives requests RQ from various clients 4 or from a downstream intermediate node 3, obtains the requested content from the origin server 2, from an upstream intermediate node 3 and/or from a local cache or buffer, and respond to the requests RQ by sending the obtained content. The intermediate node 3 schedules the processing of the requests RQ based on an "Earliest Deadline First" principle.

Similarly, an origin server 2 receives requests RQ from various clients 4 and/or intermediary nodes 3, obtains the requested content from a local data store, and responds to the requests RQ by sending the obtained content. The origin server 2 schedules the processing of the requests RQ based on an "Earliest Deadline First" principle.

Content is transmitted from an origin server 2 to an intermediate node 3, between intermediate nodes 3 or from an intermediate node 3 to a client 4 as a flow of successive packets. Under good network conditions (i.e. sufficient bandwidth to deliver the requested contents), the "Earliest Deadline First" principle allows the content transmission network 1 to operate at maximum capacity. In contrast, in case of insufficient network capacity, timely delivery of traffic can no longer be guaranteed. For at least some of the content, packets whose requested deadlines are violated will be dropped as the congestion signal to the clients 4 that initiated the requests. The packet drops being issued, consequently, impair the viewing experience (if transmission is unreliable) of the affected user or incurs data retransmission which leads to longer end-to-end delay (if transmission is reliable).

A client 4 stores received content in a buffer. Consumed content is then removed from the buffer. The size and filling level of the buffer limit the amount of content that an origin server 2 or an intermediate node 3 may send to the client 4. By cooperating to change the size of the buffer as described hereafter, an origin server 2 or an intermediate node 3 and one or more clients 4 may improve the use of available bandwidth in the content transmission network 1, and reduce the negative impact of network congestion.

**Figure 2** is a flowchart of a method for consumption of content, executed by a client 4. The client 4 sends successive requests for content, receives the requested content and stores it in a buffer, consumes the buffered content and remove it from the buffer. Consuming the content C may include displaying a video, outputting a sound, generating a user interface in function of interactive application data... A user may input commands for stopping the consumption of content, selecting a new content, performing trick play functions (pause, resume, fast forward...). This results in new requests.

Thus, the client 4 sends a request RQ to a content transmission device, which may be an intermediate node 3 or to the origin server 2 (Step S1). The request RQ specifies content C and at least one reception deadline, for example a deadline begin Db and a deadline end De based on a proposed implementation of the SCAP protocol as described before. The client 4 also sends the buffer size BS and buffer filling BL to the content transmission device. For example, the buffer size BS and buffer filling BL are specified in the request RQ according to a new implementation of the SCAP protocol, or in a distinct message.

Then, the client 4 receives, from the content transmission device, a response RESP (Step S2). The response RESP includes at least part of the requested content C, and the client 4 stores the received content in the buffer.

The client 4 may also receive, from the content transmission device, future congestion information Cl representative of predicted congestion in the content transmission network 1. In the illustrated example, the future congestion information Cl is included in the response RESP. In another example, the future congestion information Cl is included in a distinct message. The future congestion information Cl may comprise for example a flag having a predetermined value and/or a target buffer size TBS. Thus, the client 4 checks whether future congestion information Cl has been received (Step S3).

If no future congestion information Cl has been received, then the client 4 may return to step S1 and send an updated request RQ specifying the new buffer filling BF and a new starting bit for the content C, depending of the already received content.

If the client 4 has received future congestion information Cl, then the client 4 may increase the size of the buffer (Step S4). For example, the client 4 increases the size of the buffer to the target buffer size TBS in the embodiment wherein the future congestion information Cl comprises such a target buffer size. In another embodiment wherein the future congestion information Cl comprises a flag having a predetermined value, the client 4 selects, for example based on data provided by content transmission device, between increasing the size of the buffer by a predetermined amount or taking another action, such as, in case of adaptive streaming wherein the content is available in various qualities, selecting a lower quality Q for the next request RQ. When returning to step S1, the increased buffer size BS is included in new the request RQ.

Figure 2 shows steps S1 to S4 as successive steps, but they may be executed in parallel in some embodiments. Moreover, the client 4 may continuously consume the buffered content and this is not illustrated. Also, the client 4 may decrease the buffer size BS, for example after a predetermined period without receiving future congestion information Cl.

**Figure 3** is a flowchart of a method for transmission of content, executed by a content transmission device, which may be an origin server 2 or an intermediate node 3.

The content transmission device receives requests RQ for content C from a plurality of clients 4, directly and/or from downstream intermediate nodes 3 (Step T1). A request RQ is associated with at least one content reception deadline, a buffer size BS, and a buffer filling BF. For example, the content reception deadlines Db and De, the buffer size BS and the buffer filling BF are included in the request RQ according to a new specification of the SCAP protocol.

Then, the content transmission device determines a content transmission schedule SCH for transmitting the requested content C to the respective clients 4, in function of the content reception deadlines, the buffer sizes BS and the buffer fillings BF (Step T2). In a simple embodiment, determining the content transmission schedule SCH comprises selecting the request RQ associated with the earliest content reception deadline. In other embodiment, determining the content transmission schedule SCH comprises more elaborate planning and/or ordering of the requests RQ in function of the content reception deadlines DD, taking into account for example the content already available in a local buffer or cache. Moreover, when determining the content transmission schedule SCH, the buffer size BS and buffer filling BF associated with a client 4 limit the amount of content that the content transmission device 4 may send to the client 4.

Then, the content transmission device determines whether a congestion condition is met in function of the content reception deadlines (Step T3). For example, the content transmission device determines a minimum bandwidth Rₘᵢₙ necessary to transmit the requested content within the respective content reception deadlines, and compares it with the available bandwidth B. If Rₘᵢₙ > B, then the congestion condition is met. Note that this can be determined before the congestion actually occurs. The minimum bandwidth Rₘᵢₙ could be determined not only for transmission between a single pair of sender-client, but parallel transmissions between multiple senders-clients.

If the congestion condition is not met, the content transmission devices sends successive responses RESP including part of the content C according to the content transmission schedule SCH (Step T4). The responses RESP do not include future congestion information Cl and no packet drops are issued.

In contrast, if the congestion condition is met, the content transmission devices sends successive responses RESP including part of the content C according to the content transmission schedule SCH (Step T5). However, in this case, at least one of the responses RESP includes future congestion information Cl. For example, the responses RESP sent to all the clients 4 include the future congestion information Cl. In another example, only the responses RESP sent to a sub-set of clients 4 include the future congestion information Cl.

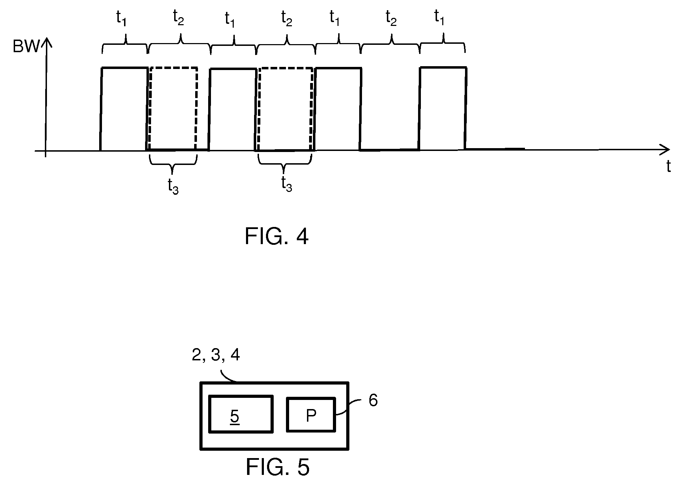

In the content transmission network 1, the origin server 2 and/or the intermediate node 3 take into account the buffer size BS and buffer filling BF of the clients 4 for scheduling transmission of content. Accordingly, the amount of content sent to one client 4 before receiving a new request specifying that at least some of the content has been consumed is limited. Consequently, content is transmitted to a first client 4 during successive periods t₁ separated by periods t₂ wherein no content is transmitted to the first client 4. This is illustrated on **Figure 4**, which is a graph illustrating bandwidth usage in function of time, wherein a continuous lines shows the bandwidth usage associated with the first client 4. This avoids sending a large amount of content to the client 4 which may not consume all the received content.

The periods t₂ may be used for transmitting content to one or more other clients 4. For example, a new request from a second client 4 associated with a given buffer size may be scheduled during periods t₃ included in the periods t₂, as illustrated by a dashed line on Figure 4.

Moreover, by adapting the buffer size, in particular when network congestion is determined or predicted, network congestion may be avoided or limited. Indeed, the periods t₃ are limited by the buffer size of the second client 4 and may be insufficient to satisfy the reception deadlines. By increasing the buffer size of the second client 4, the periods t₃ may be increased up to the full periods t₂, thereby avoiding or limiting congestion.

Here, we may distinguish two solutions, namely a network oriented solution (NOS) and a client oriented solution (COS). In the Network Oriented Solution, the content transmission device informs a few clients 4 to adapt their buffer size, while in the Client Oriented Solution, the content transmission device informs all clients. Moreover, in NOS, the intermediate node can not only select clients, but also tell them how much buffer they should adapt/increase as the network has the global picture of the network status. While in COS, the intermediate node can only inform all clients that there will be congestion in near future. It is up to the client to decide how it should adapt its buffer.

**Figure 5** is a structural view of a content transmission device, which may be an origin server 2 or an intermediate node 3. The content transmission device comprises a processor 5 and a memory 6. The memory 6 stores a computer program P which, when executed by the processor 5, causes the content transmission device to execute the method described above. A client 4 may have a similar structural architecture.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of content, executed by a content transmission device (2, 3), comprising:
- receiving (T1) requests (RQ) for content (C) from a plurality of clients (4), wherein a request (RQ) is associated with a buffer size (BS), a buffer filling (BF) and at least one content reception deadline (Db, De),
- determining (T2) a content transmission schedule (SCH) for transmitting content in response to the requests (RQ), wherein the content transmission schedule is determined in function of the buffer sizes (BS), buffer fillings (BF) and content reception deadlines (Db, De),
- determining (T3) whether a network congestion condition is met, in function of the buffer sizes, buffer fillings and content reception deadlines,
- sending (T4, T5) content to the clients (4) in function of the content transmission schedule (SCH), wherein, if the network congestion condition is met, the content transmission device (2, 3) sends, to at least one of the clients (4), future congestion information (CI).

2. Method according to claim 1, wherein the future congestion information (CI) comprises a flag having a predetermined value and/or a target buffer size.

3. Method according to one of claims 1 and 2, comprising sending the future congestion information to all the clients.

4. Method according to one of claims 1 and 2, comprising sending the future congestion information to a sub-set of the clients.

5. Method according to one of claims 1 to 4, wherein determining a content transmission schedule comprises selecting a request associated with an earliest deadline.

6. Computer program (P) comprising instructions for performing the method of one of claims 1 to 5 when said instructions are executed by a computer.

7. Content transmission device (2, 3) comprising means (5, 6, P) configured for:
- receiving (T1) requests (RQ) for content (C) from a plurality of clients (4), wherein a request (RQ) is associated with a buffer size (BS), a buffer filling (BF) and at least one content reception deadline (Db, De),
- determining (T2) a content transmission schedule (SCH) for transmitting content in response to the requests (RQ), wherein the content transmission schedule is determined in function of the buffer sizes (BS), buffer fillings (BF) and content reception deadlines (Db, De),
- determining (T3) whether a network congestion condition is met, in function of the buffer sizes, buffer fillings and content reception deadlines,
- sending (T4, T5) content to the clients (4) in function of the content transmission schedule (SCH) and, if the network congestion condition is met, future congestion information (CI) to at least one of the clients (4).

8. Method for consumption of content, executed by a client (4), comprising repeating the following steps:
- sending (S1) a request (RQ) for content (C) to a content transmission device (2, 3), wherein the request is associated with a buffer size (BS), a buffer filling (BF) and at least one content reception deadline (Db, De),
- receiving (S2), from the content transmission device (2, 3), a response including at least part of the content, storing the received content in a buffer, consuming the requested content and removing the requested content from the buffer,
- in response to receiving future congestion information (CI) from the content transmission device, increasing the buffer size (S4).

9. Method according to claim 8, wherein the buffer size, the buffer filling and the at least one content reception deadline are included in the request.

10. Method according to one of claim 8 and 9, comprising decreasing the buffer size after a predetermined period wherein no future congestion information has been received.

11. Method according to one of claims 8 to 10, wherein increasing the buffer size comprises setting the buffer size to a target buffer size specified by the future congestion information.

12. Method according to one of claims 8 to 10, wherein increasing the buffer size comprises increasing the buffer size by a predetermined amount.

13. Computer program (P) comprising instructions for performing the method of one of claims 8 to 12 when said instructions are executed by a computer.

14. Client for consumption of content, comprising means (5, 6, P) for repeating the following steps:
- sending (S1) a request (RQ) for content (C) to a content transmission device (2, 3), wherein the request is associated with a buffer size (BS), a buffer filling (BF) and at least one content reception deadline (Db, De),
- receiving (S2), from the content transmission device (2, 3), a response including at least part of the content, storing the received content in a buffer, consuming the requested content and removing the requested content from the buffer,
- in response to receiving future congestion information (CI) from the content transmission device, increasing the buffer size (S4).

15. Content transmission network (1) comprising at least one content transmission device (2, 3) according to claim 7 and at least one client according to claim 14.
